(19) Europäisches Patentamt
European Patent Office
Office européen des brevets

(11) EP 0 885 744 A1

(12) **EUROPEAN PATENT APPLICATION**
published in accordance with Art. 158(3) EPC

(43) Date of publication:
**23.12.1998 Bulletin 1998/52**

(21) Application number: **98900227.4**

(22) Date of filing: **13.01.1998**

(51) Int. Cl.[6]: **B41M 5/00**, C09D 11/02, C09D 11/10

(86) International application number:
**PCT/JP98/00091**

(87) International publication number:
**WO 98/30398 (16.07.1998 Gazette 1998/28)**

(84) Designated Contracting States:
**DE FR GB IT**

(30) Priority: **14.01.1997 JP 5019/97**

(71) Applicant:
**SEIKO EPSON CORPORATION**
**Tokyo 163 (JP)**

(72) Inventors:
- **KATO, Shinichi**
**Suwa-shi,Nagano 392 (JP)**
- **TAKEMOTO, Kiyohiko**
**Suwa-shi,Nagano 392 (JP)**

(74) Representative:
**Grünecker, Kinkeldey,**
**Stockmair & Schwanhäusser**
**Anwaltssozietät**
**Maximilianstrasse 58**
**80538 München (DE)**

# (54) INK JET RECORDING METHOD USING TWO SOLUTIONS

(57) An ink jet recording method is disclosed which comprises the step of depositing a reactant-containing reaction solution and an ink composition onto a recording medium to conduct printing on the recording medium, the weight of the ink composition deposited per dot on the recording medium being larger than the weight of the reaction solution deposited per dot on the recording medium. In this method, for the two liquids, the regulation of the surface tension and the regulation of the amount deposited on the recording medium can realize good image quality, especially a pixel (for example, a dot) having good circularity. Specifically, the surface tension of the reaction solution, $\gamma 1$ (mN/m), the surface tension of the ink composition, $\gamma 2$ (mN/m), and M = (weight of the reaction solution deposited per dot on the recording medium)/(weight of the ink composition deposited per dot on the recording medium) are regulated so as to satisfy the following:

when $\gamma 1 \leqq 35$ and $40 \leqq \gamma 2 \leqq 55$, M is 30 to 90%;
when $\gamma 1 > 35$ and $40 \leqq \gamma 2 \leqq 55$, M is 40 to 90%;
when $\gamma 1 \leqq 35$ and $\gamma 2 < 40$, M is 20 to 80%; and
when $\gamma 1 > 35$ and $\gamma 2 < 40$, M is 50 to 90%.

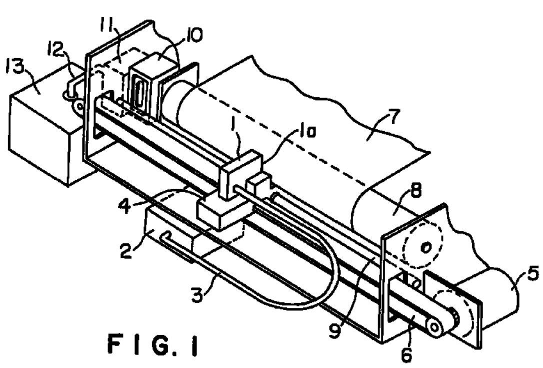


FIG. 1

EP 0 885 744 A1

## Description

[BACKGROUND OF THE INVENTION]

### Field of the Invention

The present invention relates to an ink jet recording method, and more particularly to an ink jet recording method wherein both of a reaction solution and an ink composition are deposited onto a recording medium to conduct printing.

### Background Art

Ink jet recording is a printing method wherein droplets of an ink composition are ejected and deposited onto a recording medium such as paper to conduct printing. This method has a feature that an image having high resolution and quality can be printed at a high speed by means of a relatively inexpensive apparatus. In general, the ink composition used in the ink jet recording comprises water as a main component and, added thereto, a colorant and a wetting agent, such as glycerin, for preventing nozzles from clogging.

Regarding the ink jet recording method, the application of a polyvalent metallic salt solution onto a recording medium followed by the application of an ink composition containing a dye having at least one carboxyl group has been recently proposed (for example, Japanese Patent Laid-Open No. 202328/1993). The claimed advantage of this method is that the polyvalent metal ion combines with the dye to form an insoluble complex, the presence of which can offer an image having waterfastness and high quality free from color bleeding.

Further, the use of a color ink comprising at least a surfactant for imparting a penetrating property or a solvent having a penetrating property and a salt in combination with a black ink capable of being thickened or agglomerated through the action of the salt has been proposed in the art (Japanese Patent Laid-Open No. 106735/1994). Specifically, an ink jet recording method has been proposed wherein two liquids, a first liquid containing a salt and a second liquid of an ink composition, are printed. The claimed advantage of this method is that a high-quality color image having high image density and free from color bleeding can be yielded.

In addition, several other ink jet recording methods using two liquids have been proposed in the art (for example, Japanese Patent Laid-Open Nos. 240557/1991 and 240558/1991).

Further, Japanese Patent Laid-Open No. 63185/1989 proposes a method wherein a colorless ink for insolubilizing a dye is deposited onto recording paper by means of an ink jet recording head. According to the method described in this publication, the dot diameter of the colorless ink is made larger than the dot diameter of an ink for an image. The claimed advantage of this method is that desired properties can be provided even when the position where the ink for an image has been deposited is not in register with the position where the colorless ink has been deposited. Japanese Patent Laid-Open No. 52868/1996 proposes a modification of the method described in Japanese Patent Laid-Open No. 63185/1989. The claimed advantage of the modification is that a better image can be yielded.

Some of the present inventors have proposed utilization of an ink composition, comprising at least a pigment, a resin emulsion and/or an inorganic oxide colloid, in an ink jet recording method using two liquids (Japanese Patent Laid-Open No. 207424/1997).

[SUMMARY OF THE INVENTION]

The present inventors have now found that, in an ink jet recording method using two liquids, the amounts of the two liquids deposited have a great effect on the image quality. In particular, the present inventors have found that, for each of the two liquids, the regulation of the surface tension and the regulation of the amount thereof deposited on a recording medium can realize good image quality, especially a pixel (for example, a dot) having good circularity.

Accordingly, an object of the present invention is to provide an ink jet recording method involving printing of two liquids that can realize a good image.

According to one aspect of the present invention, there is provided on ink jet recording method comprising the step of depositing a reactant-containing reaction solution and an ink composition onto a recording medium to conduct printing on the recording medium, wherein the weight of the ink composition deposited per dot on the recording medium is larger than the weight of the reaction solution deposited per dot on the recording medium.

[BRIEF DESCRIPTION OF THE DRAWINGS]

Fig. 1 is a diagram showing a preferred ink jet recording apparatus for the ink jet recording method according to the present invention, wherein a recording head is provided separately from an ink tank to feed an ink composition and a reaction solution into a recording head through an ink tube;

Fig. 2 is an enlarged view showing the surface of nozzles for a recording head which has the surface 1b of a nozzle for a reaction solution and the surface 1c of a nozzle for an ink composition;

Fig. 3 is a diagram illustrating ink jet recording using the recording head shown in Fig. 2, wherein 31 designates a region where a reaction solution has been deposited and numeral 32 a printed region where an ink composition has been printed on the deposited reaction solution;

Fig. 4 is a diagram showing another preferred embodiment of the recording head usable in practicing the ink jet recording method according to the present invention, wherein all ejection nozzles are arranged in lateral direction;

Fig. 5 is a diagram showing a preferred ink jet recording apparatus usable in practicing the ink jet recording method according to the present invention, wherein a recording head is integral with an ink tank; and

Fig. 6 is a diagram showing a preferred ink jet recording apparatus usable in practicing the ink jet recording method according to the present invention, wherein a heater is provided to heat a recording medium after printing.

[DETAILED DESCRIPTION OF THE INVENTION]

Ink jet recording method

The ink jet recording method according to the present invention comprises the step of printing a reaction solution and an ink composition onto a recording medium. According to the method of the present invention, the weight of the ink composition deposited per dot on the recording medium is made larger than the weight of the reaction solution deposited per dot on the recording medium.

The ink jet recording method according to the present invention can realize a print having high color density and no significant bleeding or feathering and unevenness. Further, advantageously, in the case of a color image, uneven color-to-color intermixing in the region of boundary between different colors, that is, color bleeding, can be effectively prevented. Further, in the present invention, as compared with the case where the reaction solution is deposited in an amount equal to or larger than the amount of the ink composition deposited, the total amount of the reaction solution and the ink composition deposited on the recording medium can be reduced. This can offer an additional advantage that the creation of a cockle problem in paper can be prevented.

According to a preferred embodiment of the present invention, the above regulation is carried out in combination with regulating the surface tension of each of the reaction solution and the ink composition. Specifically, the surface tension of the reaction solution, $\gamma 1$ (mN/m), the surface tension of the ink composition, $\gamma 2$ (mN/m), and M = (weight of the reaction solution deposited per dot on the recording medium) / (weight of the ink composition deposited per dot on the recording medium) are regulated so as to satisfy the following:

(1) when $\gamma 1 \leqq 35$ and $40 \leqq \gamma 2 \leqq 55$, M is 30 to 90%, preferably 40 to 70%;
(2) when $\gamma 1 > 35$ and $40 \leqq \gamma 2 \leqq 55$, M is 40 to 90%, preferably 50 to 70%;
(3) when $\gamma 1 \leqq 35$ and $\gamma 2 < 40$, M is 20 to 80%, preferably 30 to 60%; and
(4) when $\gamma 1 > 35$ and $\gamma 2 < 40$, M is 50 to 90%, preferably 60 to 80%.

This preferred embodiment of the present invention is advantageous in that a pixel (for example, a dot) having good circularity can be realized. The circularity of a dot formed by the ink composition can be defined as $4\pi S/L^2$ wherein S represents the area of the dot and L represents the perimeter of the dot. According to the preferred embodiment of the present invention, a very good pixel having a circularity of not less than 0.9, more preferably 0.95 to 1.0, can be formed.

In the ink jet recording method according to the present invention, the reaction solution and the ink composition may be applied on a recording medium in any sequence. Any of the following methods may be used: a method wherein a reaction solution is deposited onto a recording medium followed by deposition of an ink composition onto the recording medium with the reaction solution deposited thereon, a method wherein an ink composition is printed followed by deposition of the reaction solution, and a method wherein a reaction solution and an ink composition are mixed together immediately before or immediately after ejection thereof. According to a preferred embodiment of the present invention, a method is used wherein a reaction solution is selectively deposited on the recording medium only in its area where the ink composition is to be deposited, immediately before the deposition of the ink composition.

According to a preferred embodiment of the present invention, the reactant in the reaction solution is a polyvalent metal salt, a polyallylamine, or a derivative of the polyallylamine.

According to another preferred embodiment of the present invention, the ink composition comprises a pigment as a colorant. According to still another preferred embodiment of the present invention, the ink composition comprises a resin emulsion and/or an inorganic oxide colloid. According to the most preferred embodiment of the present invention, the ink composition comprises a pigment, a resin emulsion and/or an inorganic oxide colloid.

Reaction solution

The reaction solution used in the present invention comprises a reactant which, upon contact with the ink composition, produces an agglomerate. The agglomerate is considered to be formed as a result of a reaction of the reactant with mainly the colorant component in the ink composition. As described below, according to the present invention, the ink composition may comprise a resin emulsion and/or an inorganic oxide colloid. In this context, according to a preferred embodiment of the present invention, the reactant can preferably break the state of dissolution and/or dispersion of the resin emulsion and the inorganic oxide colloid.

The reactant used in the present invention is not limited so far as it has the above property. Preferred examples thereof include polyvalent metal salts and polyallylamines and derivatives thereof.

An example of the polyvalent metal salt usable as the reactant is a salt that is constituted by divalent or higher polyvalent metallic ions and anions bonded to the polyvalent metallic ions and is soluble in water. Specific examples of polyvalent metallic ions include divalent metallic ions, such as $Ca^{2+}$, $Cu^{2+}$, $Ni^{2+}$, $Mg^{2+}$, $Zn^{2+}$, and $Ba^{2+}$, trivalent metallic ions, such as $Al^{3+}$, $Fe^{3+}$, and $Cr^{3+}$. Anions include $Cl^-$, $NO_3^-$, $I^-$, $Br^-$, $ClO_3^-$, and $CH_3COO^-$. Especially, a metal salt constituted by $Ca^{2+}$ or $Mg^{2+}$ provides favorable results in terms of pH of the reaction solution and the quality of prints.

The concentration of the polyvalent metal salt in the reaction solution may be suitably determined so as to attain the effect of providing a good print quality and preventing clogging. It, however, is preferably about 0.1 to 40% by weight, more preferably about 5 to 25% by weight.

According to a preferred embodiment of the present invention, the polyvalent metal salt is constituted by divalent or higher polyvalent metallic ions and nitrate ions or carboxylate ions bonded to the polyvalent metallic ions and is soluble in water.

In this case, preferably, the carboxylate ions are derived from a saturated aliphatic monocarboxylic acid having 1 to 6 carbon atoms and a carbocyclic monocarboxylic acid having 7 to 11 carbon atoms. Preferred examples of the saturated aliphatic monocarboxylic acid having 1 to 6 carbon atoms include formic acid, acetic acid, propionic acid, butyric acid, isobutyric acid, valeric acid, isovaleric acid, pivalic acid, and hexanoic acid. Among them, formic acid and acetic acid are particularly preferred.

A hydrogen atom(s) on the saturated aliphatic hydrocarbon residue in the monocarboxylic acid may be substituted by a hydroxyl group. Preferred examples of such carboxylic acids include lactic acid.

Preferred examples of the carbocyclic monocarboxylic acid having 6 to 10 carbon atoms include benzoic acid and naphthoic acid with benzoic acid being more preferred.

The polyallylamine and polyallylamine derivative usable as the reactant are cationic polymers which are soluble in water and can be positively charged in water. Such polymers include, for example, those represented by the following formulae (I) to (III):

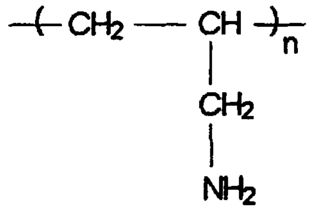

(I)

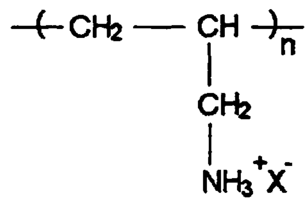

(II)

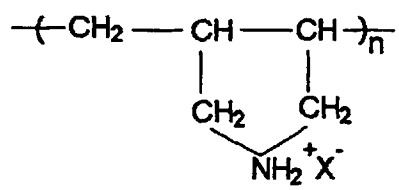

(III)

wherein $X^-$ represents chloride, bromide, iodide, nitrate, phosphate, sulfate, acetate or other ion.

In addition, a copolymer of an allylamine with a diallylamine and a copolymer of diallylmethylammmonium chloride with sulfur dioxide may also be used.

The content of the polyallylamine and/or the polyallylamine derivative is preferably 0.5 to 10% by weight based on the ink composition.

The surface tension of the reaction solution according to the present invention may be regulated by adding a penetrant. Penetrants usable in the present invention include: various surfactants, such as cationic, anionic, nonionic, and amphoteric surfactants; alcohols such as methanol, ethanol, and iso-propyl alcohol; and lower alkyl ethers of polyhydric alcohols, such as ethylene glycol monomethyl ether, diethylene glycol monoethyl ether, diethylene glycol monobutyl ether, triethylene glycol monobutyl ether, propylene glycol monobutyl ether, and dipropylene glycol monobutyl ether.

According to a preferred embodiment of the present invention, the viscosity of the reaction solution is preferably 1.5 to 10 mPa.s, more preferably 2.0 to 6.0 mPa.s.

According to a preferred embodiment of the present invention, the reaction solution comprises, in addition to the polyvalent metal salt, a polyol. The polyol has a vapor pressure of not more than 0.01 mmHg at 20°C, and the amount of the polyol added is not less than 1, preferably 1.0 to 5.0, in terms of the weight ratio to the polyvalent metal salt. Further, according to a preferred embodiment of the present invention, the amount of the polyol added is not less than 10% by weight, more preferably about 10 to 30% by weight, based on the reaction solution.

Specific examples of preferred polyols usable herein include polyhydric alcohols, for example, glycerin, diethylene glycol, triethylene glycol, 1,5-pentanediol, and 1,4-butanediol. Further specific examples of preferred polyols include saccharides, for example, monosaccharides, disaccharides, oligosaccharides (including trisaccharides and tetrasaccharides), and other polysaccharides, preferably glucose, mannose, fructose, ribose, xylose, arabinose, galactose, aldonic acid, glucitol, sorbitol, maltose, cellobiose, lactose, sucrose, trehalose, and maltotriose.

These polyols may be added alone or as a mixture of two or more. When the polyols are used as a mixture of two or more, the amount of the mixture added is such that the weight ratio of the total amount of the two or more polyols to the polyvalent metal salt is not less than 1.

According to a preferred embodiment of the present invention, the reaction solution comprises a wetting agent

comprising a high-boiling organic solvent. The high-boiling organic solvent serves to prevent the reaction solution from being concentrated due to evaporation, thus preventing clogging of a recording head. Preferred examples of high-boiling organic solvents, some of which are those described above in connection with the polyol, include polyhydric alcohols such as ethylene glycol, diethylene glycol, triethylene glycol, polyethylene glycol, polypropylene glycol, propylene glycol, butylene glycol, 1,2,6-hexanetriol, thioglycol, hexylene glycol, glycerin, trimethylolethane, and trimethylolpropane; alkyl ethers of polyhydric alcohols, such as ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, and triethylene glycol monoethyl ether, and triethylene glycol monobutyl ether; urea, 2-pyrrolidone, N-methyl-2-pyrrolidone, 1,3-dimethyl-2-imidazolidinone, and triethanolamine.

Although the amount of the high-boiling organic solvent added is not particularly limited, it is preferably about 0.5 to 40% by weight, more preferably about 2 to 20% by weight.

According to a preferred embodiment of the present invention, the reaction solution comprises a low-boiling organic solvent. Preferred examples of low-boiling organic solvents usable herein include methanol, ethanol, n-propyl alcohol, iso-propyl alcohol, n-butanol, sec-butanol, tert-butanol, iso-butanol, and n-pentanol. Monohydric alcohols are particularly preferred. The low-boiling organic solvent has the effect of shortening the time taken for drying the ink. The amount of the low-boiling organic solvent added is preferably in the range of from 0.5 to 10% by weight, more preferably in the range of from 1.5 to 6% by weight.

According to a preferred embodiment of the present invention, the reaction solution contains triethanolamine for adjusting pH. When the triethanolamine is used, the amount thereof is preferably about 0 to 2.0% by weight.

A colorant, which will be described below in the paragraph of "Ink composition," may be added to color the reaction solution, thereby permitting the reaction solution to serve also as the ink composition.

<u>Ink composition</u>

The ink composition to be used in the present invention comprises at least a colorant and water.

The colorant can preferably react with the reactant to form an agglomerate. The colorant may be either a dye or a pigment with the pigment being preferred.

Dyes usable herein include various dyes commonly used in ink jet recording, such as direct dyes, acid dyes, foodstuff dyes, basic dyes, reactive dyes, disperse dyes, vat dyes, soluble vat dyes, and reactive disperse dyes.

Regarding the pigment, inorganic and organic pigments are usable without any particular limitation. Examples of the inorganic pigment include, in addition to titanium oxide and iron oxide, carbon blacks produced by known processes, such as contact, furnace, and thermal processes. Examples of the organic pigment include azo pigments (including azo lake, insoluble azo pigment, condensed azo pigment, and chelate azo pigment), polycyclic pigments (for example, phthalocyanine, perylene, perinone, anthraquinone, quinacridone, dioxazine, thioindigo, isoindolinone, and quinophthalone pigments), dye chelates (for example, basic dye chelates and acid dye chelates), nitro pigments, nitroso pigments, and aniline black.

According to a preferred embodiment of the present invention, the above pigment is preferably added, to the ink, in the form of a pigment dispersion prepared by dispersing the pigment in an aqueous medium with the aid of a dispersant or a surfactant. Preferred dispersants include those commonly used in the preparation of a dispersion of a pigment, for example, polymeric dispersant. In this connection, that the dispersant and the surfactant contained in the dispersion of the pigment function also as the dispersant and the surfactant for the ink composition will be apparent to a person having ordinary skill in the art.

The amount of the pigment added to the ink is preferably about 0.5 to 25% by weight, more preferably about 2 to 15% by weight.

According to a preferred embodiment of the present invention, the ink composition comprises a resin emulsion. The term "resin emulsion" used herein refers to an emulsion comprising water as a continuous phase and the following resin component as a dispersed phase. Resin components as the dispersed phase include acrylic resin, vinyl acetate resin, styrene/butadiene resin, vinyl chloride resin, (meth)acrylate/styrene resin, butadiene resin, styrene resin, crosslinked acrylic resin, crosslinked styrene resin, benzoguanamine resin, phenolic resin, silicone resin, and epoxy resin.

According to a preferred embodiment of the present invention, the resin is a polymer having a combination of a hydrophilic segment with a hydrophobic segment. The particle diameter of the resin component is not particularly limited so far as the resin component can form an emulsion. It, however, is preferably not more than about 150 nm, more preferably about 5 to 100 nm.

The resin emulsion may be prepared by dispersion polymerization of a resin monomer, optionally together with a surfactant, in water. For example, an emulsion of an acrylic resin or a styrene/acrylic resin may be prepared by subjecting an ester of (meth)acrylic acid or alternatively an ester of (meth)acrylic acid in combination with styrene to dispersion polymerization in water in the presence of a surfactant. In general, the mixing ratio of the resin component to the surfactant is preferably about 10 : 1 to 5 : 1. When the amount of the surfactant used falls within the above range, it is possible to provide an ink which has better waterfastness in the form of an image and better penetrability. Preferred examples thereof include anionic surfactants (for example, sodium dodecylbenzenesulfonate, sodium laurate and an ammonium salt of a polyoxyethylene alkyl ether sulfate); nonionic surfactants (for example, a polyoxyethylene alkyl ether, a polyoxyethylene alkyl ester, a polyoxyethylene sorbitan fatty acid ester, a polyoxyethylene alkyl phenyl ether, a polyoxyethylene alkylamine, and a polyoxyethylene alkylamide). They may be used alone or as a mixture of two or more. Further, it is also possible to use acetylene glycol (OLFINE Y and Surfynol 82, 104, 440, 465, and 485 (all the above products being manufactured by Air Products and Chemicals Inc.).

The ratio of the resin as the component constituting the dispersed phase to water is suitably 60 to 400 parts by weight based on 100 parts by weight of the resin with 100 to 200 parts by weight, based on 100 parts by weight of the resin, of water being preferred.

Known resin emulsions may also be used as the above resin emulsion. For example, resin emulsions described in Japanese Patent Publication No. 1426/1987 and Japanese Patent Laid-Open Nos. 56573/1991, 79678/1991, 160068/1991, and 18462/1992 as such may be used as the resin emulsion in the present invention.

Further, commercially available resin emulsions may also be used, and examples thereof include Microgel E-10002 and E-5002 (styrene/acrylic resin emulsion, manufactured by Nippon Paint Co., Ltd.), Voncoat 4001 (acrylic resin emulsion, manufactured by Dainippon Ink and Chemicals, Inc.), Voncoat 5454 (styrene/acrylic resin emulsion, manufactured by Dainippon Ink and Chemicals, Inc.), SAE-1014 (styrene/acrylic resin emulsion, manufactured by Nippon Zeon Co., Ltd.), and Saivinol SK-200 (acrylic resin emulsion, manufactured by Saiden Chemical Industry Co., Ltd).

In the ink used in the present invention, the amount of the resin emulsion incorporated therein is preferably such that the amount of the resin component is in the range of from 0.1 to 40% by weight, more preferably in the range of from 1 to 25% by weight, based on the ink.

The resin emulsion has the effect of inhibiting the penetration of a coloring component and, further, accelerating the fixation on the recording medium by virtue of an interaction between the resin emulsion and the reactant, particularly a polyvalent metal ion or polyallylamine or polyallylamine derivative. Further, some resin emulsions have an additional effect that they form a film on the recording medium to improve the rubbing/scratch resistance of the resultant print.

According to a preferred embodiment of the present invention, the ink composition contains a thermoplastic resin in the form of a resin emulsion. In this case, the thermoplastic resin has a softening temperature of 50 to 250°C, preferably 60 to 200°C. The term "softening temperature" used herein refers to the lowest temperature among the glass transition point of the thermoplastic resin, the melting point of the thermoplastic resin, the temperature which brings the viscosity of the thermoplastic resin to $10^{11}$ to $10^{12}$ poises, the pour point of the thermoplastic resin, and the minimum film forming temperature (MFT) in the form of an emulsion of the thermoplastic resin. In the step of heating according to the method of the present invention, the recording medium is heated to at least the softening temperature of the thermoplastic resin.

Further, preferably, the thermoplastic resin, when heated at the softening or melting temperature or a higher temperature and then cooled, forms a strong film having waterfastness and rubbing/scratch resistance.

Specific examples of water-insoluble thermoplastic resins include, but are not limited to, polyacrylic acid, polymethacrylic acid, an ester of polymethacrylic acid, polyethylacrylic acid, a styrene/butadiene copolymer, polybutadiene, an acrylonitrile/butadiene copolymer, a chloroprene copolymer, a fluororesin, a fluororesin, polyvinylidene fluoride, polyolefin resin, cellulose, a styrene/acrylic acid copolymer, a styrene/methacrylic acid copolymer, polystyrene, a styrene/acrylamide copolymer, polyisobutyl acrylate, polyacrylonitrile, polyvinyl acetate, polyvinyl acetal, polyamide, rosin resin, polyethylene, a polycarbonate, a vinylidene chloride resin, a cellulosic resin, a vinyl acetate resin, an ethylene/vinyl acetate copolymer, a vinyl acetate/(meth)acrylate copolymer, a vinyl chloride resin, polyurethane, and a rosin ester.

Specific examples of low-molecular weight thermoplastic resins include polyethylene wax, montan wax, alcohol wax, synthetic oxide wax, an $\alpha$-olefin/maleic anhydride copolymer, animal and vegetable waxes such as carnauba wax, lanolin, paraffin wax, and microcrystalline wax.

According to a preferred embodiment of the present invention, the ink composition to be used in the present invention contains an inorganic oxide colloid. Preferred examples of inorganic oxide colloids usable herein include colloidal silica and alumina colloid. These are generally a colloidal solution of ultrafine particles of $SiO_2$ or $Al_2O_3$ dispersed in water or an organic solvent. Commercially available inorganic oxide colloids are generally such that the dispersion medium is water, methanol, 2-propanol, n-propanol, xylene or the like and the diameter of $SiO_2$, $Al_2O_3$ and other particles is 5 to 100 nm. Further, pH of the colloidal solutions of inorganic oxide is, in many cases, adjusted to the acidic or alkaline side rather than the neutral region. This is because the stable dispersion region of the inorganic oxide colloid is present on the acidic side or the alkaline side. In adding the colloidal solution to the ink composition, pH of the stable dispersion region of the inorganic oxide colloid and pH of the ink should be taken into consideration.

The amount of the inorganic oxide colloid added to the ink composition is preferably 0.1 to 15% by weight, and addition of two or more inorganic oxide colloids is also possible.

According to a preferred embodiment of the present invention, the ink composition preferably comprises an alginic acid derivative. Preferred examples of alginic acid derivatives include alkali metal salts (for example, sodium salt and potassium salt) of alginic acid, organic acid salts (for example, triethanolamine salt) of alginic acid, and ammonium alginate.

The amount of the alginic acid derivative added to the ink composition is preferably about 0.01 to 1% by weight, more preferably about 0.05 to 0.5% by weight.

Although the reason why a good image can be formed by the addition of an alginic acid derivative has not been elucidated yet, it is considered that the polyvalent metal salt present in the reaction solution reacts with the alginic acid derivative in the ink composition to vary the dispersed state of the colorant, promoting the fixation of the colorant onto the recording medium.

According to a preferred embodiment of the present invention, the ink composition preferably contains an organic solvent. The organic solvent is preferably a low-boiling organic solvent, and preferred examples thereof include methanol, ethanol, n-propyl alcohol, iso-propyl alcohol, n-butanol, sec-butanol, tert-butanol, iso-butanol, and n-pentanol. Monohydric alcohols are particularly preferred. The low-boiling organic solvent has the effect of shortening the time taken for drying the ink.

Further, according to a preferred embodiment of the present invention, the ink composition used in the present invention further comprises a wetting agent comprising a high-boiling organic solvent. Preferred examples of high-boiling organic solvents usable herein include polyhydric alcohols such as ethylene glycol, diethylene glycol, triethylene glycol, polyethylene glycol, polypropylene glycol, propylene glycol, butylene glycol, 1,2,6-hexanetriol, thioglycol, hexylene glycol, glycerin, trimethylolethane, and trimethylolpropane; alkyl ethers of polyhydric alcohols, such as ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether, and triethylene glycol monobutyl ether; urea; 2-pyrrolidone; N-methyl-2-pyrrolidone; 1,3-dimethyl-2-imidazolidinone; and triethanolamine.

The amount of the wetting agent added is preferably about 0.5 to 40% by weight, more preferably 2 to 20% by weight, based on the ink. The amount of the low-boiling organic solvent added is preferably about 0.5 to 10% by weight, more preferably 1.5 to 6% by weight, based on the ink.

According to a preferred embodiment of the present invention, the ink composition contains a saccharide. Examples of saccharides usable herein include monosaccharides, disaccharides, oligosaccharides (including trisaccharides and tetrasaccharides), and other polysaccharides, preferably glucose, mannose, fructose, ribose, xylose, arabinose, galactose, aldonic acid, glucitol, sorbitol, maltose, cellobiose, lactose, sucrose, trehalose, and maltotriose. The term "polysaccharide" used herein refers to saccharides, in a broad sense, including substances which widely exist in the natural world, such as alginic acid, $\alpha$-cyclodextrin, and cellulose.

Derivatives of these saccharides include reducing sugars of the above saccharides (for example, sugar alcohols represented by the general formula $HOCH_2(CHOH)_nCH_2OH$ wherein n is an integer of 2 to 5), oxidized sugars (for example, aldonic acid and uronic acid), amino acid, and thiosugars. Sugar alcohols are particularly preferred, and specific examples thereof include maltitol and sorbitol.

The content of the above saccharide is suitably in the range of from 0.1 to 40% by weight, preferably 0.5 to 30% by weight, based on the ink.

The surface tension of the ink composition to be used in the present invention may be regulated by adding a penetrant. Specific examples of penetrants usable herein include those described above in connection with the reaction solution.

According to a preferred embodiment of the present invention, the viscosity of the ink composition is preferably 1.5 to 10 mPa.s, more preferably 2.0 to 6.0 mPa.s.

Further, if necessary, pH adjustors, preservatives, antimolds and the like may be added.

<u>Ink jet recording apparatus</u>

An ink jet recording apparatus for practicing the ink jet recording method according to the present invention will now be described with reference to the accompanying drawings.

Fig. 1 is a diagram showing an embodiment of an ink jet recording apparatus. In this embodiment, an ink composition and a reaction solution are accommodated in a tank and fed into a recording head through an ink tube. A recording head 1 is communicated with an ink tank 2 through an ink tube 3. The interior of the ink tank 2 is partitioned, and a chamber for an ink composition, optionally a plurality of chambers respectively for a plurality of color ink compositions, and a chamber for a reaction solution are provided.

The recording head 1 is moved along a carriage 4 by means of a timing belt 6 driven by a motor 5. Paper 7 as a recording medium is placed by a platen 8 and a guide 9 at a position facing the recording head 1. In this embodiment, a cap 10 is provided. A suction pump 11 is connected to the cap 10 in order to conduct the so-called "cleaning operation." The ink composition sucked by the pump 11 is resorvoired in a waste ink tank 13 through a tube 12.

Fig. 2 is an enlarged view showing the surface of nozzles for the recording head 1. On the surface 1b of nozzles for a reaction solution, nozzles 21 for ejecting the reaction solution is provided in the longitudinal direction. On the surface 1c of nozzles for the ink composition, nozzles 22, 23, 24 and 25 are provided for a yellow ink composition, a magenta ink composition, a cyan ink composition, and a black ink composition, respectively.

Further, an ink jet recording method using the recording head shown in Fig. 2 will be described with reference to Fig. 3. The recording head 1 is moved in the direction indicated by an arrow A, during which time the reaction solution is ejected through the nozzle face 1b to form a reaction solution-deposited region 31 in a band form on the recording medium 7. Subsequently, the recording medium 7 is transferred by a predetermined extent in the paper feed direction indicated by an arrow B, while the recording head 1 is moved in the direction opposite to that indicated by the arrow A in the drawing and returned to the left end of the recording medium 7. The recording head then conduct printing using the ink composition on the reaction solution-deposited region, thereby forming a print region 32.

Further, as shown in Fig. 4, in the recording head 1, it is also possible to arrange all nozzles in the lateral direction to construct a nozzle assembly. In the drawing, ejection nozzles for a reaction solution are denoted by 41a and 41b, and a yellow ink composition, a magenta ink composition, a cyan ink composition, and a black ink composition are ejected respectively through nozzles 42, 43, 44 and 45. In the recording head according to this embodiment, the recording head 1, when reciprocated on the carriage, can conduct printing in both directions. Therefore, in this case, printing at a higher speed is expected as compared with the case where the recording head shown in Fig. 2 is used.

Further, when the reaction solution and the ink composition are preferably adjusted so as to fall within the respective surface tension ranges, a high-quality print can be more stably provided regardless of the order of deposition of the reaction solution and the ink composition. In this embodiment, even the provision of a single ejection nozzle suffices for satisfactory results. For example, the nozzle 41b may be omitted. This can contribute to a further reduction in size of the head and a further increase in printing speed.

In the ink jet recording apparatus, the supplement of the ink composition may be carried out by replacing an ink tank in a cartridge form. The ink tank may be integral with the recording head.

A preferred embodiment of an ink jet recording apparatus using such an ink tank is shown in Fig. 5. In the drawing, the same members as used in the apparatus shown in Fig. 1 have the same reference numerals. In the embodiment shown in Fig. 5, recording heads 1a and 1b are integral respectively with ink tanks 2a and 2b. An ink composition and a reaction solution are ejected respectively through the recording heads 1a and 1b. Printing may be conducted in the same manner as described above in connection with the apparatus shown in Fig. 1. Further, in this embodiment, the recording head 1a is moved together with the ink tank 2a on a carriage 4, while the recording head 1a is moved together with the ink tank 2b on the carriage 4.

A preferred embodiment of an ink jet recording apparatus wherein a heater for heating a printed recording medium is further provided is shown in Fig. 6. The embodiment shown in Fig. 6 is the same as the embodiment shown in Fig. 1, except that a heater 14 is additionally provided. The heater 14 may be of a contact type wherein, in heating the recording medium, it is brought into contact with the recording medium. Alternatively, the heater 14 may be of a non-contact type where the recording medium is heated by applying infrared rays or the like or blowing hot air to the recording medium.

## [EXAMPLES]

The present invention will be described in more detail with reference to the following examples, though it is not limited to these examples only.

The following reaction solutions and ink compositions were prepared by a conventional method. Specifically, the reaction solution was prepared by mixing the following ingredients together. The ink composition was prepared by dispersing the colorant component together with the dispersant component, adding other ingredients, mixing them together, and removing insolubles having a given size or larger by filtration.

<u>Reaction solution 1</u>

| | |
|---|---|
| Magnesium nitrate hexahydrate | 25 wt% |
| Triethylene glycol monobutyl ether | 10 wt% |
| Glycerin | 10 wt% |
| Ion-exchanged water | Balance |

Reaction solution 2

| | |
|---|---|
| Polyallylamine | 3 wt% |
| Triethylene glycol monobutyl ether | 10 wt% |
| Glycerin | 15 wt% |
| Ion-exchanged water | Balance |

Reaction solution 3

| | |
|---|---|
| $Mg(NO_3)_2$ hexahydrate | 25 wt% |
| TEGmBE | 5 wt% |
| Glycerin | 2 wt% |
| Ion-exchanged water | Balance |

Ink 1

| | |
|---|---|
| Carbon black MA7 | 5 wt% |
| Liquid medium Styrene/acrylic copolymer ammonium salt (molecular weight 7000, resin component 38 wt%; dispersant) | 1.5 wt% |
| Almatex Z116 (resin emulsion, resin component 50%, manufactured by Mitsui Toatsu Chemicals, Inc.) | 5 wt% |
| Snowtex S (colloidal silica, $SiO_2$ content 30 wt%, manufactured by Nissan Chemical Industry Ltd.) | 1.5 wt% |
| Maltitol | 3.5 wt% |
| Glycerin | 10 wt% |
| 2-Pyrrolidone | 2 wt% |
| Ion-exchanged water | Balance |

Ink 2

| | |
|---|---|
| Carbon black Raven 1080 | 5 wt% |
| Liquid medium Styrene/acrylic copolymer ammonium salt (molecular weight 7000, resin component 38 wt%; dispersant) | 1.5 wt% |
| Almatex Z116 (resin emulsion, resin component 50%, manufactured by Mitsui Toatsu Chemicals, Inc.) | 3 wt% |
| Maltitol | 7 wt% |
| Glycerin | 10 wt% |
| 2-Pyrrolidone | 2 wt% |
| Ion-exchanged water | Balance |

Ink 3

| | |
|---|---|
| Carbon black MA7 | 5 wt% |
| Liquid medium Styrene/acrylic copolymer ammonium salt (molecular weight 7000, resin component 38 wt%; dispersant) | 1.5 wt% |
| Snowtex S (colloidal silica, $SiO_2$ content 30 wt%, manufactured by Nissan Chemical Industry Ltd.) | 1.5 wt% |
| Maltitol | 3.5 wt% |
| Glycerin | 10 wt% |
| 2-Pyrrolidone | 2 wt% |
| Ion-exchanged water | Balance |

Ink 4

| | |
|---|---|
| Carbon black MA7 | 5 wt% |
| Liquid medium Styrene/acrylic copolymer ammonium salt (molecular weight 7000, resin component 38 wt%; dispersant) | 1.5 wt% |
| Voncoat 5454 (styrene/acrylic resin emulsion, resin component 45%, manufactured by Dainippon Ink and Chemicals, Inc.) | 5 wt% |
| Almatex Z116 (resin emulsion, resin component 50%, manufactured by Mitsui Toatsu Chemicals, Inc.) | 3 wt% |
| Maltitol | 7 wt% |
| Glycerin | 10 wt% |
| 2-Pyrrolidone | 2 wt% |
| Neocol SW (sodium salt of dialkylsulfosuccinic ester, manufactured by Dai-ichi Kogyo Seiyaku Co., Ltd.) | 0.8 wt% |
| Ion-exchanged water | Balance |

The surface tension and the viscosity of the above reaction solutions and ink compositions were as follows.

Table 1

| Surface tension and viscosity of ink and reaction solution | | |
|---|---|---|
| | Surface tension, mN/m | Viscosity, mPa.s at 20°C |
| Reaction solution 1 | 35 | 4.2 |
| Reaction solution 2 | 33 | 4.0 |
| Reaction solution 3 | 41 | 2.8 |
| Ink 1 | 52 | 4.4 |
| Ink 2 | 48 | 4.1 |
| Ink 3 | 44 | 4.0 |
| Ink 4 | 38 | 4.1 |

Print evaluation test

Printing was performed on two recording papers, Xerox 4024 3R 721 (Xerox Corp) and Xerox R (recycled paper, manufactured by Xerox Corp), by means of an ink jet printer MJ-700 V2C (manufactured by Seiko Epson Corporation). In the printing, the reaction solution was first deposited onto a recording medium (100% duty), and dots were then printed using the ink composition.

The amount of the reaction solution and the amount of the ink composition deposited on the recording medium were as specified in the following table.

Further, the circularity of the dots thus formed by the ink composition was defined as $4\pi S/L^2$, wherein S represents the area of the dot and L represents the perimeter of the dot. For 10 dots, the circularity was measured, and the average of measurements was determined. The results were evaluated according to the following criteria:

A: Circularity of 0.95 to 1.0 for both papers
B: Circularity of not less than 0.9 for both papers
C: Circularity of 0.9 to 0.8 for any one of or both papers
NG: Circularity of less than 0.8 for any one of or both papers.

The evaluation results were as summarized in the following tables.

Table 2

| Amount of reaction solution (ng)/weight of ink (ng) | 10/40 | 12/40 | 16/40 | 24/40 | 36/40 | 40/40 |
|---|---|---|---|---|---|---|
| M(%) | 25 | 30 | 40 | 60 | 90 | 100 |
| Reaction solution 1/ink 1 | C | B | A | A | B | C |
| Reaction solution 1/ink 2 | C | B | A | A | B | C |
| Reaction solution 1/ink 3 | C | B | A | A | B | C |
| Reaction solution 2/ink 1 | C | B | A | A | B | C |
| Reaction solution 2/ink 2 | C | B | A | A | B | C |
| Reaction solution 2 /ink 3 | C | B | A | A | B | C |

Table 3

| Amount of reaction solution (ng)/weight of ink (ng) | 10/40 | 16/40 | 20/40 | 28/40 | 36/40 | 40/40 |
|---|---|---|---|---|---|---|
| M(%) | 25 | 40 | 50 | 70 | 90 | 100 |
| Reaction solution 3/ink 1 | C | B | A | A | B | C |
| Reaction solution 3/ink 2 | C | B | A | A | B | C |
| Reaction solution 3/ink 3 | C | B | A | A | B | C |

Table 4

| Amount of reaction solution (ng)/weight of ink (ng) | 4/40 | 6/40 | 12/40 | 24/40 | 32/40 | 40/40 |
|---|---|---|---|---|---|---|
| M(%) | 10 | 20 | 30 | 60 | 80 | 100 |
| Reaction solution 1/ink 4 | C | B | A | A | B | C |
| Reaction solution 2/ink 4 | C | B | A | A | B | C |

Table 5

| Amount of reaction solution (ng)/weight of ink (ng) | 12/40 | 20/40 | 24/40 | 32/40 | 36/40 | 40/40 |
|---|---|---|---|---|---|---|
| M(%) | 30 | 50 | 60 | 80 | 90 | 100 |
| Reaction solution 3/ink 4 | C | B | A | A | B | C |

## Claims

**1.** An ink jet recording method comprising the step of depositing a reactant-containing reaction solution and an ink composition onto a recording medium to conduct printing on the recording medium, wherein

the weight of the ink composition deposited per dot on the recording medium is larger than the weight of the reaction solution deposited per dot on the recording medium.

**2.** The ink jet recording method according to claim 1, wherein the surface tension of the reaction solution, $\gamma 1$ (mN/m), the surface tension of the ink composition, $\gamma 2$ (mN/m), and M = (weight of the reaction solution deposited per dot on the recording medium) / (weight of the ink composition deposited per dot on the recording medium) satisfy the following:

when $\gamma 1 \leqq 35$ and $40 \leqq \gamma 2 \leqq 55$, M is 30 to 90%;
when $\gamma 1 > 35$ and $40 \leqq \gamma 2 \leqq 55$, M is 40 to 90%;
when $\gamma 1 \leqq 35$ and $\gamma 2 < 40$, M is 20 to 80%; and
when $\gamma 1 > 35$ and $\gamma 2 < 40$, M is 50 to 90%.

**3.** The ink jet recording method according to claim 2, wherein the surface tension of the reaction solution, $\gamma 1$ (mN/m), the surface tension of the ink composition, $\gamma 2$ (mN/m), and M = (weight of the reaction solution deposited per dot on the recording medium) / (weight of the ink composition deposited per dot on the recording medium) satisfy the following:

when $\gamma 1 \leqq 35$ and $40 \leqq \gamma 2 \leqq 55$, M is 40 to 70%;
when $\gamma 1 > 35$ and $40 \leqq \gamma 2 \leqq 55$, M is 50 to 70%;
when $\gamma 1 \leqq 35$ and $\gamma 2 < 40$, M is 30 to 60%; and
when $\gamma 1 > 35$ and $\gamma 2 < 40$, M is 60 to 80%.

**4.** The ink jet recording method according to any one of claims 1 to 3, wherein the viscosity at 20°C of the reaction solution and the ink composition is 1.5 to 10 mPa.s.

**5.** The ink jet recording method according to any one of claims 1 to 4, wherein the reactant produces an agglomerate upon contact with the ink composition.

**6.** The ink jet recording method according to any one of claims 1 to 5, wherein the reactant is a polyvalent metal salt, a polyallylamine, or a derivative of a polyallylamine.

7. The ink jet recording method according to any one of claims 1 to 6, wherein the ink composition comprises a pigment as a colorant.

8. The ink jet recording method according to any one of claims 1 to 7, wherein the ink composition comprises a resin emulsion and/or an inorganic oxide colloid.

9. The ink jet recording method according to any one of claims 1 to 7, wherein the inorganic oxide colloid is a colloidal silica.

10. A recording medium recorded by the method according to any one of claims 1 to 9.

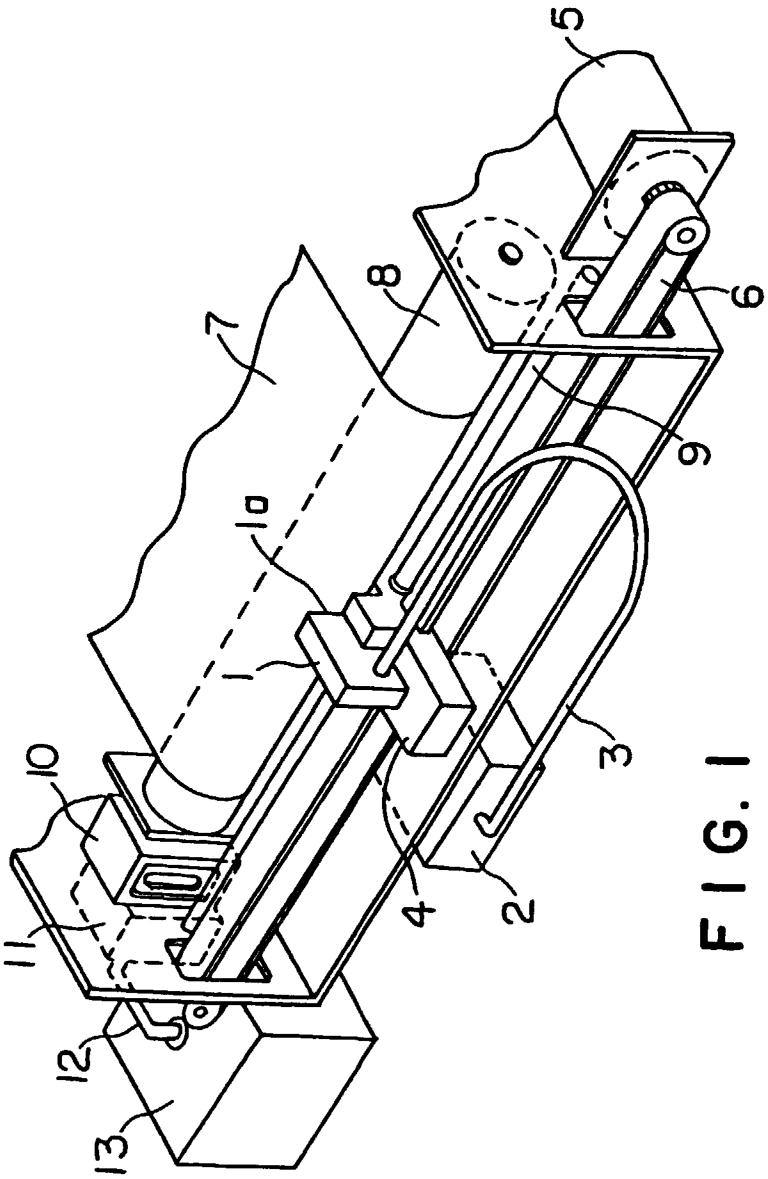


FIG. 1

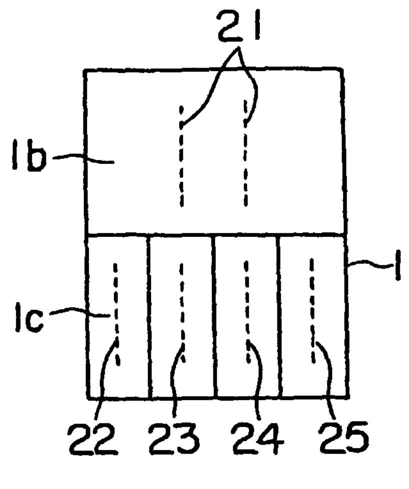


FIG. 2

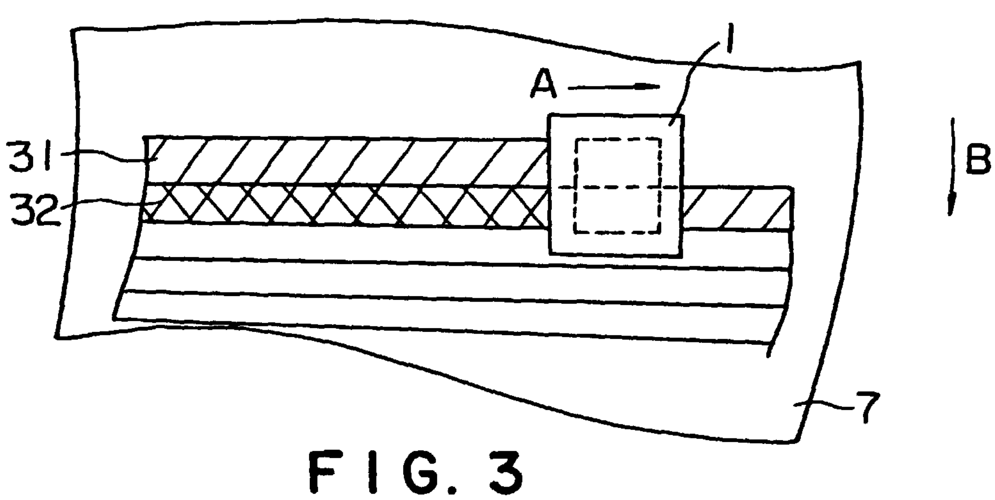


FIG. 3

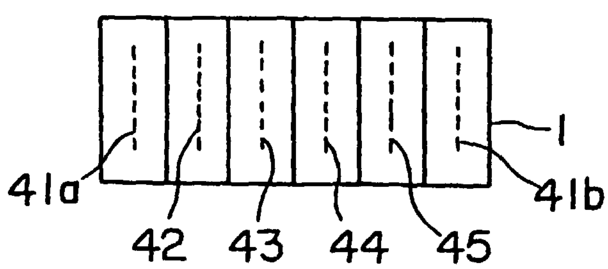


FIG. 4

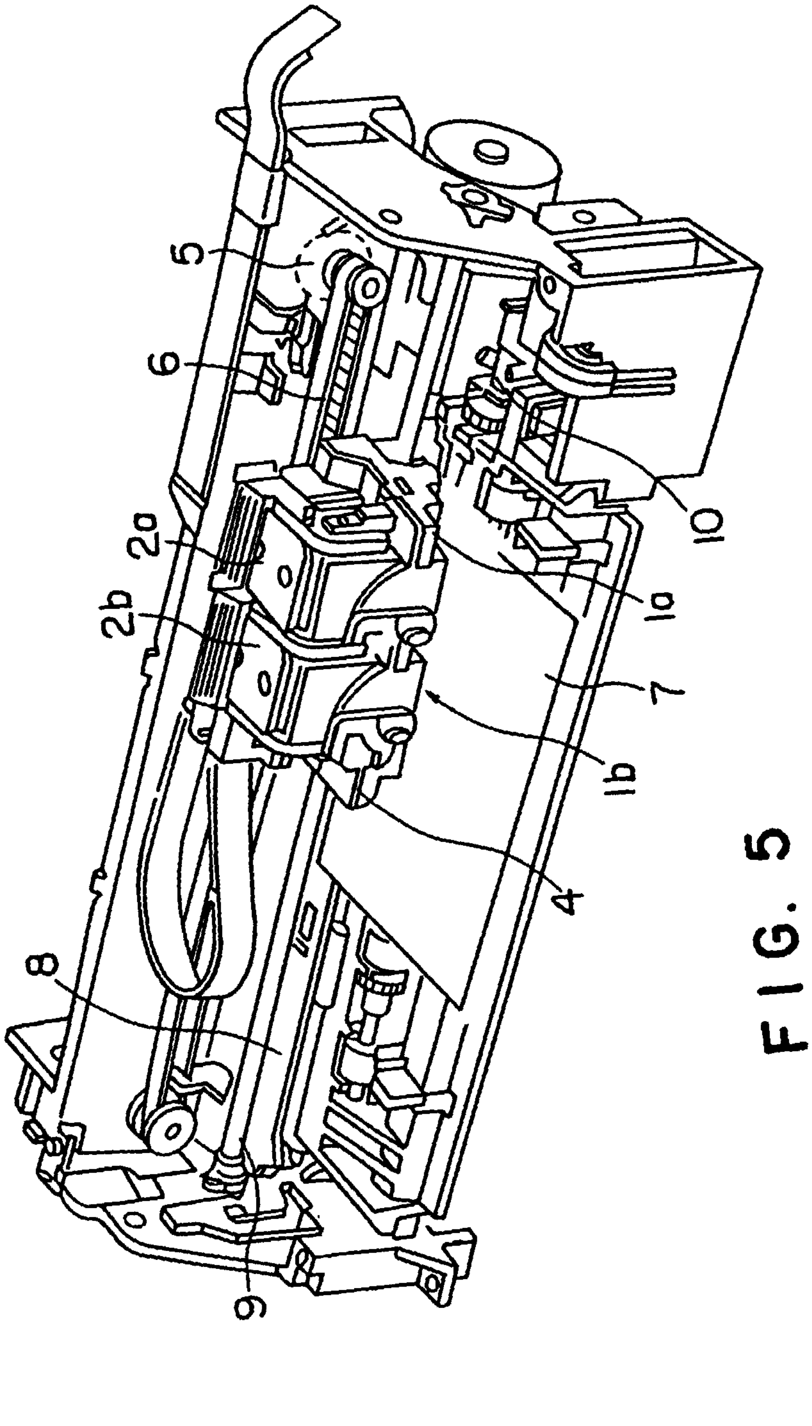


FIG. 5

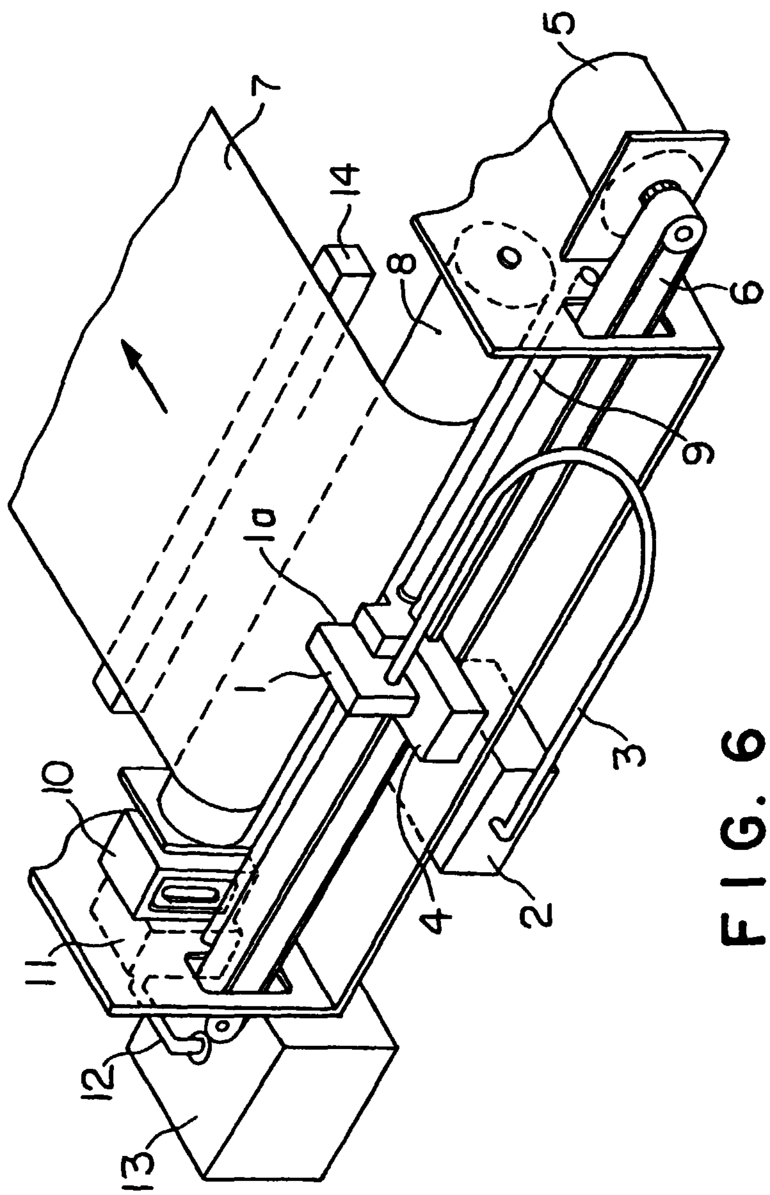


FIG. 6

## INTERNATIONAL SEARCH REPORT

International application No.
PCT/JP98/00091

**A. CLASSIFICATION OF SUBJECT MATTER**
Int.Cl$^6$ B41M5/00, C09D11/02, 11/10

According to International Patent Classification (IPC) or to both national classification and IPC

**B. FIELDS SEARCHED**

Minimum documentation searched (classification system followed by classification symbols)
Int.Cl$^6$ B41M5/00, C09D11/02, 11/10

Documentation searched other than minimum documentation to the extent that such documents are included in the fields searched

| | | | |
|---|---|---|---|
| Jitsuyo Shinan Koho | 1922-1998 | Toroku Jitsuyo Shinan Koho | 1994-1998 |
| Kokai Jitsuyo Shinan Koho | 1971-1992 | Jitsuyo Shinan Toroku Koho | 1996-1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y<br>A | JP, 8-20720, A (Canon Inc.), January 23, 1996 (23. 01. 96), Claims 1 to 12 ; Par. Nos. [0007], [0008], [0023] to [0037], [0057] to [0081], [0074] (Family: none) | 1, 5, 7,<br>6, 10<br>8, 9<br>2-4 |
| Y | JP, 5-202328, A (Hewlett-Packard Co.), August 10, 1993 (10. 08. 93), Claim 1 & EP, 534634, A1 | 6 |
| Y | JP, 3-240557, A (Seiko Epson Corp.), October 25, 1991 (25. 10. 91), Claims ; page 2, lower left column, line 11 to page 3, lower left column, line 12 (Family: none) | 8 |
| Y | JP, 7-196966, A (Canon Inc.), August 1, 1995 (01. 08. 95), Claims 1, 11 ; Par. No. [0079] & EP, 656406, A2 | 8, 9 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>March 27, 1998 (27. 03. 98) | Date of mailing of the international search report<br>April 14, 1998 (14. 04. 98) |
| Name and mailing address of the ISA/<br>Japanese Patent Office<br><br>Facsimile No. | Authorized officer<br><br><br>Telephone No. |

Form PCT/ISA/210 (second sheet) (July 1992)

INTERNATIONAL SEARCH REPORT

International application No.
PCT/JP98/00091

C (Continuation). DOCUMENTS CONSIDERED TO BE RELEVANT

| Category* | Citation of document, with indication, where appropriate, of the relevant passages | Relevant to claim No. |
|---|---|---|
| T | JP, 9-207424, A (Seiko Epson Corp.), August 12, 1997 (12. 08. 97), Claims 1 to 11 (Family: none) | 2-4 |

Form PCT/ISA/210 (continuation of second sheet) (July 1992)